# EUROPÄISCHE PATENTSCHRIFT

(11) **EP 2 763 775 B1**
(45) Veröffentlichungstag und Bekanntmachung des Hinweises auf die Patenterteilung: **24.06.2020**
(21) Anmeldenummer: 12777863.7
(22) Anmeldetag: 06.10.2012
(51) Int. Cl.: B01D 29/11

(54) **FILTERELEMENT MIT EINER STÜTZSTRUKTUR**
FILTER ELEMENT WITH A SUPPORT STRUCTURE
ÉLÉMENT FILTRANT AVEC UNE STRUCTURE SUPPORT

(30) Priorität: 07.10.2011 DE 102011115050
(43) Veröffentlichungstag der Anmeldung: 13.08.2014
(73) Patentinhaber: Hydac Filtertechnik GmbH, 66280 Sulzbach/Saar (DE)
(72) Erfinder: SCHMITZ, Andreas, 66459 Kirkel (DE); SCHWENDER, Matthias, 66459 Kirkel (DE); KOCH, Edwin, 66636 Tholey (DE); JOCHUM, Stefan, 66557 Hüttigweiler (DE)
(74) Vertreter: Bartels und Partner, Patentanwälte
(86) Internationale Anmeldenummer: PCT/EP2012/004198
(87) Internationale Veröffentlichungsnummer: WO 2013/050176

(56) Entgegenhaltungen:
- EP-A1- 0 682 967
- EP-A1- 1 391 229
- EP-A1- 2 138 218
- WO-A1-00/76620
- WO-A2-97/24169
- US-A- 4 309 878
- US-A- 5 417 610
- US-A1- 2003 155 293
- US-A1- 2003 168 398

## Beschreibung

Die Erfindung betrifft ein Filterelement gemäß der Merkmalsausgestaltung des Oberbegriffes des Patentanspruches 1.

Ein derartigesFilterelement ist beispielsweise aus US 5 783 067 bekannt, dessenStützstruktur die Wand eines Stützrohres bildet, welches die Außenseite eines Filtermediums umgibt, und ein Lochmuster bildende Fluiddurchlassöffnungen aufweist. Die Fluiddurchlässe im Stützrohr sind als gerundete Langlöcher ausgebildet, die jeweils zwei parallel zueinander verlaufende Seitenlinien und zwei die Seitenlinien miteinander verbindende Kurvenlinien aufweisen. Die als Langlöcher ausgebildeten Fluiddurchlassöffnungen sind derart ausgerichtet, dass sie sich jeweils in radialer Richtung entlang des Stützrohres erstrecken.

Für den Betrieb von Filtereinrichtungen, wie sie beispielsweise in Hydrauliksystemen zur Filtration von Hydraulikflüssigkeiten oder in anderen Anlagen zur Filtration von Kraftstoffen, Schmierstoffen oder anderen Betriebsmitteln eingesetzt werden, ist ein gutes Betriebsverhalten der benutzten Filterelemente vorrangig. Wesentliche Gesichtspunkte sind hierbei eine druckfeste Abstützung der Filtermedien gegen angreifende Strömungskräfte, was eine hohe mechanische Festigkeit der betreffenden Stützstruktur bedingt, und dass durch die Stützstruktur ein Mindestmaß an Strömungswiderstand erzeugt werden soll. Um diesen sich widerstrebenden Forderungen so weit wie möglich gerecht zu werden, ist es Stand der Technik, Lochmuster mit Rundlöchern zu bilden. Um die erwünschten niedrigen Werte des Strömungswiderstandes zu erreichen, müssen die Löcher in entsprechend dichter Packung angeordnet werden, wodurch sich zwischen den Löchern Materialengstellen ergeben, die Schwachstellen der Stützstruktur bilden, so dass sich regelmäßig kein optimaler Kompromiss aus Strukturfestigkeit und Fluiddurchlässigkeit erreichen lässt.

Durch EP 1391229 A1 ist ein gattungsgemäßes Filterelement bekannt, umfassend eine mantelförmige Stützstruktur in Längsrichtung und mindestens ein an der Stützstruktur anliegendes Filtermedium, die rohrzylinderförmig zwischen einer oberen und einer unteren Endkappe angeordnet ist und die mindestens ein horizontal in x-Richtung und vertikal in y-Richtung sich erstreckendes Flächenteil umfasst, in welchem mehrere Fluiddurchlassöffnungen mit vorgegebenen Öffnungsquerschnitten ausgebildet sind, die am Flächenteil gleichförmig ausgebildet und regelmäßig angeordnet sind. Der rohrzylinderförmige Mantel der Stützstruktur ist aus einem wendelförmig aufgewickelten Metallstreifen erhalten, der kreisrunde Fluiddurchtrittstellen aufweist, die ansonsten auch jede andere beliebige Form haben können.

WO 97/24169 A2 offenbart ein Filterelement mit plissiertem Filtermedium, das von einer Stützstruktur umgeben ist, die Durchlassöffnungen in jedweder geeigneter Anordnung aufweist, einschließlich in quadratischer, rechteckförmiger, länglicher oder elliptischer Öffnungsform.

Im Hinblick auf diese Problematik stellt sich die Erfindung die Aufgabe, ein Filterelement zur Verfügung zu stellen, das sich durch eine hohe mechanische Festigkeit bei gleichzeitig guter Fluiddurchlässigkeit auszeichnet.

Diese Aufgabe ist gelöst durch ein Filterelement mit den Merkmalen des Patentanspruches 1 in seiner Gesamtheit.

Dadurch, dass gemäß dem kennzeichnenden Teil des Patentanspruchs 1 der Öffnungsquerschnitt der jeweiligen Fluiddurchlassöffnung die Form einer Ellipse umfasst, dass die jeweilige Ellipse in x-Richtung eine erste Achse und in y-Richtung eine zweite Achse aufweist, dass die Ellipsengleichung für die jeweilige Fluiddurchlassöffnung) in der Normalform für eine zusammenfallende Koordinaten- und Ellipsenachse x²/a² + y²/b² = 1 ist, und dass die in x-Richtung langgestreckte Ellipsenform quer zur Längsrichtung des Stützkörpers ausgebildet ist, wird eine verbesserte mechanische Stabilität, genauer eine erhöhte Zugfestigkeit und ein erhöhter Berstdruck des Flächenteils bzw. der Stützstruktur bei zugleich guter Fluiddurchlässigkeit erreicht. Durch die ellipsenförmige Ausbildung des jeweiligen Öffnungsquerschnitts wird eine Materialentlastung bei Spannungs- oder Krafteinleitung in die Stützstruktur erreicht. Die erfindungsgemäße Formgebung führt zu einer Materialentlastung an den Engstellen oder Schwachstellen der Struktur bei Belastung durch Strömungskräfte.

Ein besonders bevorzugtes erfindungsgemäßes Filterelement ist dadurch charakterisiert, dass das Flächenteil seiner Stützstruktur aufgestellt einen Mantel ausbildet, der in einer schräg zur Längsachse der mantelförmigen Struktur verlaufenden Wickelrichtung aus einem fortlaufenden bahnförmigen Band gebildet ist. Insbesondere ist die Wickelrichtung des Bandes wendel-, spiral- oder schraubenförmig gebildet. Durch den dahingehenden helixförmigen Aufbau für die Stützstruktur ergibt sich in hohem Maße eine Aussteifung und Druckstabilität für die hier angesprochene Struktur.

Eine bevorzugte Ausführungsform des erfindungsgemäßen Filterelementes ist dadurch charakterisiert, dass in der schräg zur Längsachse des Mantels der Stützstruktur verlaufenden Wickelrichtung ausgerichtete erste Flächenbereiche jeweils regelmäßig angeordnete, nebeneinanderliegende Fluiddurchlassöffnungen mit den jeweils ellipsenförmigen Öffnungsquerschnitten aufweisen.

Aufgrund der regelmäßigen Anordnung der Fluiddurchlassöffnungen kommt es zu einem verbesserten Durchströmungsverhalten mit geringem Widerstand durch die ansonsten geschlossene Mantelform der Stützstruktur. Vorzugsweise ist dabei vorgesehen, dass zwischen den bahnförmig ausgebildeten ersten Flächenbereichen jeweils zweite Flächenbereiche ohne darin ausgebildete Fluiddurchlässe vorhanden sind.

Eine weitere besonders bevorzugte Ausführungsform eines Filterelementes ist dadurch charakterisiert, dass bei einer Wickelbauweise der Stützstruktur in den zweiten Flächenbereichen, unter Freilassen der Fluiddurchlassöffnungen in den ersten Flächenbereichen, Verbindungsstellen, vorzugsweise realisiert in Form einer Schweißverbindung oder einer fortlaufend ausgeführten Falznaht, benachbarter Flächenteile bzw. des in Wickelrichtung aufgewickelten bandförmigen Flächenteils angeordnet sind. Hierdurch stehen geschlossene Verbindungsstellen zur Verfügung, die die Realisierung einer fortlaufenden Schweißnaht ebenso ermöglichen, wie die einer fortlaufend ausgeführten Falz- oder Bördelnaht. Auch wird durch die benötigte Verbindungsstelle es vermieden den Fluiddurchlass über die Fluiddurchlassöffnungen zu beeinträchtigen. An Stelle der Wickelbauweise kann die Stützstruktur auch aus einem zylinderförmigen Mantel gebildet sein, mit oder ohne Längsverbindungsnaht, wobei dann die Verbindungsstellen insoweit entfallen, wobei es jedoch nach wie vor für den Erhalt einer guten Druckstabilität der Stützstruktur es vorteilhaft ist, in Bereichen zwischen den Fluiddurchlassöffnungen Flächenteile vorzusehen, die als geschlossenen Mantelfläche ausgeführt sind.

Als besonders vorteilhaft hat es sich erwiesen, bei einem bahnförmig fortlaufend ausgebildeten Band oder Flächenteil mittig die Fluiddurchlassöffnungen vorzusehen, die randseitig zu dem benachbart gegenüberliegenden Bandrändern von den zweiten Flächenbereichen, die später die Verbindungsstellen bilden, begrenzt sind. Das angesprochene fortlaufende Band lässt sich einfach herstellen und mit der benötigten ellipsenförmigen Perforation versehen.

Eine weitere, besonders bevorzugte Ausgestaltung einer erfindungsgemäßen Stützstruktur ist dadurch charakterisiert, dass die Neigung der Wickelrichtung derart gewählt ist, dass bei fertig gewickeltem Flächenteil die jeweilige Ellipsen-Hauptachse der Fluiddurchlassöffnungen der Wickelrichtung folgt, oder parallel, oder quer zur Längsachse des Stützstruktur-Mantels angeordnet ist.

Die Ellipse ist der geometrische Ort aller Punkte, für die die Summe der Abstände von zwei gegebenen festen Punkten, den Brennpunkten, konstant gleich ist. Mit der Brennpunkteigenschaft, genauer zwei Brennpunkten, der Ellipse einher geht ihre Exzentrizität. Hierdurch unterscheidet sie sich von einem Kreis.

Die Fluiddurchlassöffnungen am Flächenteil sind gleichförmig ausgebildet und regelmäßig angeordnet. Hieraus ergibt sich der Vorteil insbesondere räumlich homogener Eigenschaften der Stützstruktur und entsprechend räumlich homogener Filtrationseigenschaften eines mit einer erfindungsgemäßen Stützstruktur versehenen Filterelements. Das Filtermedium kann in üblicher Art aufgebaut sein, beispielsweise in Form einer mehrlagigen Filtermattenbahn, die plisseeartig gefaltet und in die Form eines zylindrischen Hohlkörpers gebracht ist. Das Flächenteil der Stützstruktur bildet eine Durchströmfläche, die entsprechend den Öffnungsquerschnitten der Fluiddurchlassöffnungen von Fluid durchtreten werden kann.

Bei einer bevorzugten Ausführungsform des erfindungsgemäßen Filterelementes sind in zumindest einem Flächenbereich des Flächenteils der Stützstruktur die entsprechenden Fluiddurchlassöffnungen in Reihen und Spalten angeordnet. Neben einer Erleichterung der Fertigung der Stützstruktur ist ein optimaler Kompromiss aus Strukturfestigkeit und Fluiddurchlässigkeit erreicht. Die Ausbildung der Fluiddurchlassöffnungen und eines entsprechenden Musters kann auf verschiedene Art und Weise erfolgen, beispielsweise durch Lasern, Pressen oder bei der für das Lochstanzen geeigneten Werkstoffen in vorteilhafter Weise durch Stanzen. Als für das Lochstanzen geeigneter Werkstoff kann ein Metallblech, das gegenüber den zu filtrierenden Medien korrosionsbeständig ist, benutzt werden. Dabei kann es sich um ein feuerlaminiertes Blech (Zincor®) handeln, das verzinkt werden kann, wobei bei Wickelbauweise der Stützstruktur die Verbindungsstellen benachbarter Flächenteile miteinander verlötet werden können. Es ist jedoch auch denkbar, die Stützstruktur aus einem Kunststoffmaterial herzustellen.

In einer weiteren Ausgestaltung des erfindungsgemäßen Filterelementes ist am Flächenteil der Stützstruktur mindestens ein Markierungsbereich mit jeweils einer erkennbaren Markierung ausgebildet. Zweckmäßigerweise ist die Markierung optisch und/oder haptisch erkennbar ausgebildet, beispielsweise als Bedruckung, Beschriftung und/oder Erhebung. Hierbei ist die jeweilige Markierung zweckmäßigerweise an einer Außenseite der Stützstruktur bzw. des Filterelements ausgebildet.

Besonders bevorzugt ist die jeweilige Markierung durch mindestens eine weitere Fluiddurchlassöffnung im Flächenteil ausgebildet. Eine derartige Markierung lässt sich ohne allzu großen Mehraufwand in die Stützstruktur einbringen und zeichnet sich durch eine gute Erkennbarkeit sowie eine genaue Lesbarkeit von beiden Seiten des Flächenteils aus.

Weitere Merkmale und Vorteile der Erfindung ergeben sich aus den Figuren und der nachfolgenden Beschreibung der Zeichnung. Die vorstehend angeführten und die weiter aufgeführten Merkmale können erfindungsgemäß jeweils einzeln oder in beliebigen Kombinationen miteinander kombiniert werden. Die in den Figuren gezeigten Merkmale sind rein schematisch und nicht maßstäblich zu verstehen. Es zeigen:
- Fig. 1a: eine Draufsicht eines aus dem Stand der Technik bekannten Flächenteils;
- Fig. 1b: eine Draufsicht eines erfindungsgemäß ausgestalteten Flächenteils;
- Fig. 2a und 2b: jeweils einen vergrößerten Ausschnitt des Flächenteils aus Fig. 1a bzw. 1b; und
- Fig. 3: ein Filterelement mit einer erfindungsgemäßen Stützstruktur.

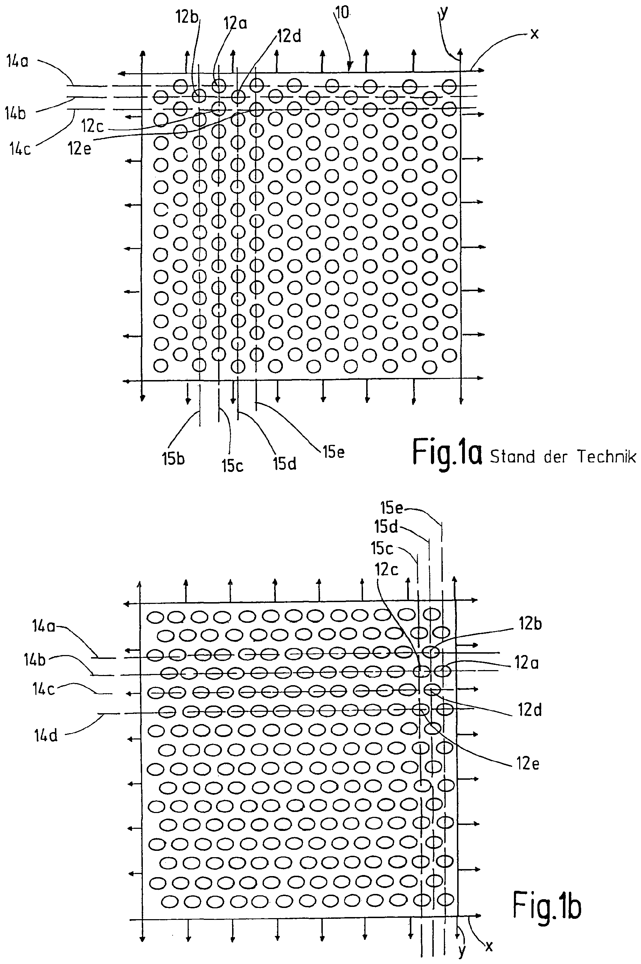

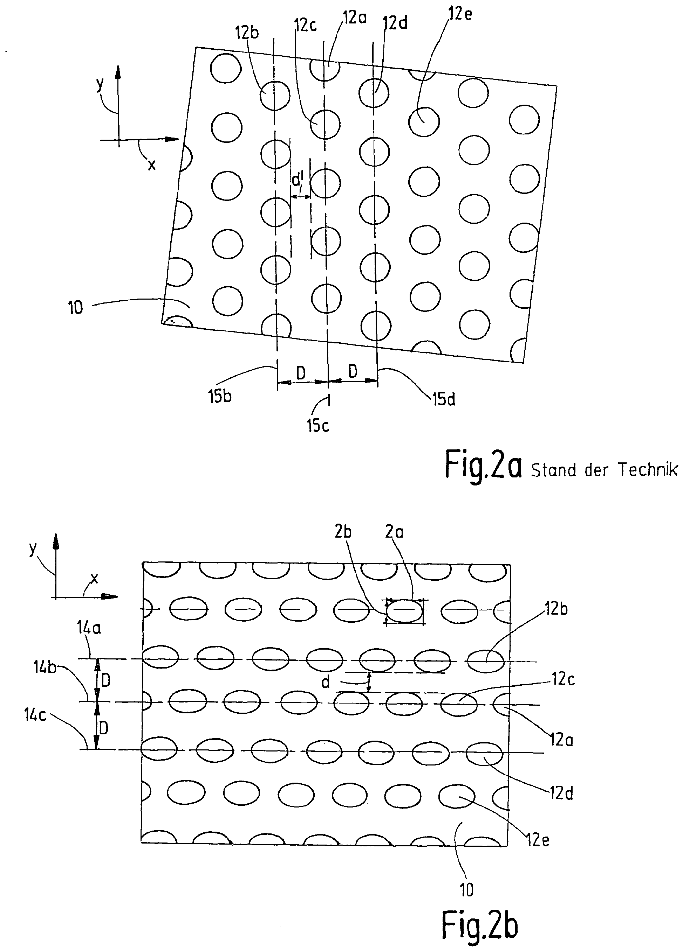

Ein in Fig. 1a und in Fig. 2a vergrößert dargestelltes Flächenteil 10 erstreckt sich horizontal in x-Richtung und vertikal in y-Richtung und weist prinzipiell nur in der jeweils genannten Darstellung eine rechteckförmige, genauer quadratische Form auf. Im Flächenteil 10 sind eine Vielzahl von Fluiddurchlassöffnungen 12a-12e ausgebildet, welche jeweils eine kreisrunde Querschnittsform, anders ausgedrückt einen kreisförmigen Öffnungsquerschnitt, aufweisen und entlang der x-Richtung in Reihen 14a-14c und entlang der y-Richtung in Spalten 15b-15e regelmäßig angeordnet sind. Die Reihen 14a-14c und Spalten 15b-15e der Fluiddurchlassöffnungen 12a-12e sind derart abwechselnd zueinander versetzt, dass eine Fluiddurchlassöffnung 12d einer Reihe 14b - in x-Richtung betrachtet - mittig zwischen den benachbarten Fluiddurchlassöffnungen 12a, 12c, 12e der beiden nächstliegenden Reihen 14a, 14c angeordnet ist. Entsprechend ist die Fluiddurchlassöffnung 12d der Spalte 15d - in y-Richtung betrachtet - mittig zwischen den benachbarten Fluiddurchlassöffnungen 12a, 12c, 12e der beiden nächstliegenden Spalten 15c, 15e angeordnet.

Ein in Fig. 1b und in Fig. 2b vergrößert dargestelltes erfindungsgemäß ausgestaltetes Flächenteil 10 unterscheidet sich von dem in den Fig. 1a und 2a dargestellten herkömmlichen Flächenteil dadurch, dass die Fluiddurchlassöffnungen 12a-12e ellipsenförmige Öffnungsquerschnitte aufweisen. Durch die von einer Kreisform abweichende Außenkontur der jeweiligen Fluid-durchlassöffnung 12a-12e weist das erfindungsgemäße Flächenteil 10 eine optimierte Perforation auf, was zu einer verbesserten Zugfestigkeit führt. Während bei bekannten Stützstrukturen die Kraft zur plastischen Verformung ca. 0,3-1,5 N/*µ*m beträgt, kann dieser Wert bei einem erfindungsgemäßen Flächenteil bis zu 2,4 N/*µ*m gesteigert werden. Die Kraft zur plastischen Verformung in x-oder y-Richtung ist in Fig. 1a und 1b mit Pfeilen an Randseiten des jeweiligen Flächenteils 10 angedeutet.

In Fig. 2b ist die geometrische Ausgestaltung der erfindungsgemäß gestalteten Fluiddurchlassöffnungen 12a-12e gut erkennbar. Die jeweilige Ellipse weist in x-Richtung eine erste Achse 2a und in y-Richtung eine zweite Achse 2b auf. Die Ellipsengleichung für die jeweilige Fluiddurchlassöffnung 12a-12e lautet in der Normalform, d.h., für zusammenfallende Koordinaten- und Ellipsenachse x²/a² + y²/b² = 1. Durch die in x-Richtung langgestreckte Ellipsenform des jeweiligen Öffnungsquerschnitts ist der Abstand d zwischen Fluiddurchlassöffnungen 12a-12c unmittelbar nebeneinanderliegender Reihen 14a, 14b gegenüber dem im Stand der Technik bekannten, für Spalten und Reihen gleichen, in Fig. 2a für die Spalten 15b, 15c gezeigten Abstand d' vergrößert und entsprechend der Abstand zwischen Fluiddurchlassöffnungen unmittelbar nebeneinanderliegender Spalten verkleinert, wodurch sich eine verbesserte Zugfestigkeit des Flächenteils 10 insbesondere in y-Richtung ergibt. Insbesondere werden Breiten- zu Längenverhältnissen angestrebt, die vorzugsweise als ganzzahlige Verhältniszahlen gesehen zwischen 1:1 und 1:5 liegen, wobei der letztgenannte Wert auch realisierbar ist, wohingegen der erstgenannte Wert unmittelbar einen Kreis betreffen würde, der nicht den beanspruchten Ellipsenformen zuzurechnen ist.

Bei der erfindungsgemäßen Aus- bzw. Umgestaltung des Flächenteils 10, d.h., beim Übergang von Fig. 1a und 2a zu Fig. 1b und 2b, bleibt der Abstand D zwischen den Mittelpunkten der in Spalten 15b-15e und Reihen 14a-14d angeordneten Fluiddurchlassöffnungen 12a-12e unverändert und werden die Öffnungsquerschnitte der Fluiddurchlassöffnungen 12a-12e von der Größe her zumindest nicht verkleinert, so dass die Fluiddurchlässigkeit des Flächenteils 10 nicht beeinträchtigt wird. Vorteilhafterweise wird jedoch der jeweilige Öffnungsquerschnitt zudem flächenmäßig vergrößert, so dass neben einer verbesserten Zugfestigkeit eine erhöhte Fluiddurchlässigkeit erreicht wird.

Betrachtet man den rückwärtigen Berstdruck, so werden bei herkömmlichen Stützstrukturen ein Differenzdruck von ca. 2,3 bar in ca. 170 Sek., von ca. 2,4 bar in 300 Sek. und 2,1 bar in 320 Sek. erreicht. Durch die erfindungsgemäß geänderte Lochung wird einem Differenzdruck von über 4 bar in einem Zeitraum von 330 Sek. standgehalten.

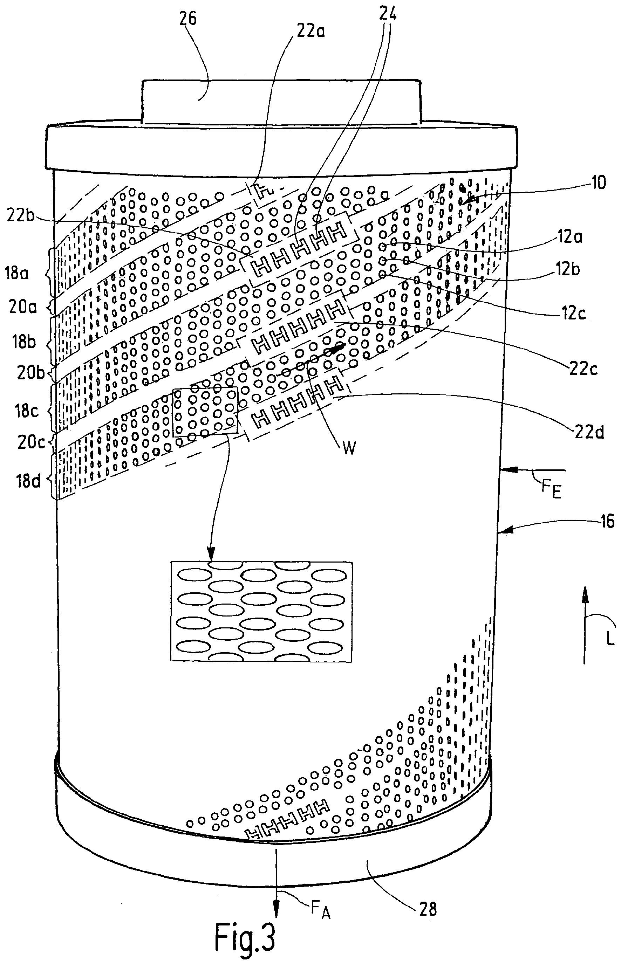

In Fig. 3 ist ein zu einer mantelförmigen Stützstruktur 16 aufgestelltes Flächenteil 10 gezeigt. In einer schräg zur Längsrichtung L der mantelförmigen Stützstruktur 16 verlaufenden Wickelrichtung W ausgerichteten ersten Flächenbereichen 18a-18d sind jeweils regelmäßig nebeneinanderliegende Fluiddurchlassöffnungen 12a-12c mit jeweils ellipsenförmigem Öffnungsquerschnitt angeordnet. Zwischen den bahnförmigen ersten Flächenbereichen 18a-18d sind jeweils zweite Flächenbereiche 20a-20c ohne darin ausgebildete Fluiddurchlässe ausgebildet, welche insoweit die mechanische Stabilität der Stützstruktur 16 verbessern. Bei einer Wickelbauweise der Stützstruktur 16 sind in den zweiten Flächenbereichen 20a-20c die Verbindungsstellen benachbarter Flächenteile bzw. eines in Wickelrichtung W aufgewickelten Flächenteils ausgebildet.

Die zweiten Flächenbereiche 20a-20c werden jeweils durch einen Markierungsbereich 22a-22d unterbrochen, wobei alle Markierungsbereiche 22a-22d im vorliegenden Beispiel in Längsrichtung L übereinanderliegend angeordnet sind. In den Markierungsbereichen 22a-22d sind jeweils neben-einanderliegend fünf weitere, in Wickelrichtung W angeordnete Fluiddurchlassöffnungen 24 in Form eines Buchstabens, hier H, ausgebildet, so dass die entsprechende Markierung zusätzlich als Fluiddurchlass wirkt.

Die Fluiddurchlassöffnungen 12a-12c sind entlang der ersten Flächenbereiche 18a-18d in Wickelrichtung W verlaufend derart nebeneinanderliegend angeordnet, dass jeweils fünf Fluiddurchlassöffnungen 12a-12c nebeneinanderliegend und in Längsrichtung L fluchtend angeordnet sind. Die Fluiddurchlassöffnungen 12a-12c sind jeweils ellipsenförmig mit einer Erstreckung in horizontaler Richtung, d.h., quer zur Längsrichtung L, ausgebildet. Bei der Herstellung des Flächenteils 10 werden die Fluiddurchlassöffnungen 12a-12c entsprechend der hier gezeigten Einbausituation, genauer dem von der Längsrichtung L und der Wickelrichtung W des jeweiligen bahnförmigen Flächenbereichs 18a-18d eingeschlossenen Winkels ausgebildet und ausgerichtet.

Es versteht sich, dass die Anzahl, Ausbildung und Anordnung der Fluiddurchlassöffnungen 12a-12c, 24 anforderungsgerecht eingestellt und optimiert werden kann. Die mantelförmig, insbesondere rohrzylinderförmig, ausgebildete Stützstruktur 16 ist zwischen einer oberen Endkappe 26 und einer unteren Endkappe 28 angeordnet und bildet mit diesen ein im Übrigen nicht weiter gezeigtes Filterelement aus. Das Filterelement wird von einem Filtereinlass zu einem Filterauslass, wie mit den Pfeilen F_{E} und F_{A} gezeigt, typischerweise von außen nach innen im Filtrationsbetrieb durchströmt.

## Patentansprüche

1. Filterelement, umfassend eine mantelförmige Stützstruktur (16) in Längsrichtung (L) und mindestens ein an der Stützstruktur (16) anliegendes Filtermedium, wobei die Stützstruktur (16) rohrzylinderförmig zwischen einer oberen (26) und einer unteren Endkappe (28) angeordnet ist und aus mindestens einem horizontal in x-Richtung und vertikal in y-Richtung sich erstreckenden Flächenteil (10) geformt ist, in welchem mehrere Fluiddurchlassöffnungen (12a-12e) mit vorgegebenen Öffnungsquerschnitten ausgebildet sind, die (12a-12e) am Flächenteil (10) gleichförmig ausgebildet und regelmäßig angeordnet sind, **dadurch gekennzeichnet, dass** der Öffnungsquerschnitt der jeweiligen Fluiddurchlassöffnung (12a-12e) die Form einer Ellipse umfasst, dass die jeweilige Ellipse in x-Richtung eine erste Achse (2a) und in y-Richtung eine zweite Achse (2b) aufweist, dass die Ellipsengleichung für die jeweilige Fluiddurchlassöffnung (12a-12e) in der Normalform für eine zusammenfallende Koordinaten- und Ellipsenachse x²/ a² + y²/ b² = 1 ist, und dass die in x-Richtung langgestreckte Ellipsenform quer zur Längsrichtung des Stützkörpers (16) ausgebildet ist.

2. Filterelement nach Anspruch 1, **dadurch gekennzeichnet, dass** das Flächenteil (10) aufgestellt einen Mantel ausbildet, der in einer schräg zur Längsachse (L) der mantelförmigen Struktur verlaufenden Wickelrichtung (W) aus einem fortlaufenden bahnförmigen Band gebildet ist.

3. Filterelement nach Anspruch 1 oder 2, **dadurch gekennzeichnet, dass** die Wickelrichtung (W) des Bandes wendel-, spiral- oder schraubenförmig ist.

4. Filterelement nach Anspruch 2 oder 3, **dadurch gekennzeichnet, dass** in der schräg zur Längsrichtung (L) des Mantels verlaufenden Wickelrichtung (W) ausgerichtete ersten Flächenbereichen (18a-18d) jeweils regelmäßig angeordnete, nebeneinanderliegende Fluiddurchlassöffnungen (12a-12e) mit den jeweils ellipsenförmigen Öffnungsquerschnitten aufweisen.

5. Filterelement nach Anspruch 4, **dadurch gekennzeichnet, dass** zwischen den bahnförmig ausgebildeten ersten Flächenbereiche (18a-18d) jeweils zweite Flächenbereichen (20a-20c) ohne darin ausgebildete Fluiddurchlässe vorhanden sind.

6. Filterelement nach Anspruch 5, **dadurch gekennzeichnet, dass** bei einer Wickelbauweise in den zweiten Flächenbereichen (20a-20c), unter Freilassen der Fluiddurchlassöffnungen (12a-12e) in den ersten Flächenbereichen (18a-18d), Verbindungsstellen, vorzugsweise realisiert in Form einer Schweißverbindung oder einer fortlaufend ausgeführten Falznaht, benachbarter Flächenteile (10) bzw. des in Wickelrichtung (W) aufgewickelten bandförmigen Flächenteils (10) angeordnet sind.

7. Filterelement nach einem der Ansprüche 2 bis 6, **dadurch gekennzeichnet, dass** als bahnförmig fortlaufend ausgebildete Band- oder Flächenteil (10) mittig die Fluiddurchlassöffnungen (12a-12e) aufweist, die randseitig zu den benachbart gegenüberliegenden Bandrändern von den zweiten Flächenbereichen (20a-20c) begrenzt sind.

8. Filterelement nach einem der Ansprüche 2 bis 7, **dadurch gekennzeichnet, dass** die Neigung der Wickelrichtung (W) derart gewählt ist, dass bei fertig gewickeltem Flächenteil (10) die jeweilige Ellipsen-Hauptachse der Fluiddurchlassöffnungen (12a-12e) quer zur Längsachse (L) des Stützstruktur-Mantels angeordnet ist.

9. Filterelement nach einem der Ansprüche 4 bis 8, **dadurch gekennzeichnet, dass** in mindestens dem einen Flächenbereich (18a-18d) des Flächenteils (10) die entsprechenden Fluiddurchlassöffnungen (12a-12e) in Reihen (14a-14c) und Spalten (15b-15e) angeordnet sind.

10. Filterelement nach einem der vorhergehenden Ansprüche, **dadurch gekennzeichnet, dass** am Flächenteil (10) mindestens ein Markierungsbereich (22a-22d) mit jeweils einer erkennbaren Markierung ausgebildet ist.

11. Filterelement nach einem der vorhergehenden Ansprüche, **dadurch gekennzeichnet, dass** die jeweilige Markierung durch mindestens eine weitere Fluiddurchlassöffnung (24) im Flächenteil (10) ausgebildet ist.

## Claims

1. Filter element comprising a sheath-like support structure (16) in the longitudinal direction (L) and at least one filter medium lying on the support structure (16), wherein the support structure (16) is arranged in the form of a cylindrical tube between an upper (26) and a lower end cap (28) and is moulded from at least one surface portion (10) extending horizontally in the x direction and vertically in the y direction, in which a plurality of fluid passage openings (12a-12e) with pre-defined opening cross-sections are formed, which (12a-12e) have identical shapes on the surface portion (10) and are arranged in a regular pattern, **characterised in that** the opening cross-section of the respective fluid passage opening (12a-12e) takes the shape of an ellipse, **in that** the respective ellipse comprises a first axis (2a) in the x direction and a second axis (2b) in the y direction, **in that** the ellipse equation for the respective fluid passage opening (12a-12e) is x²/ a² + y²/ b² = 1 in the normal form when the coordinate and ellipse axes coincide, and **in that** the elongated ellipse shape in the x direction is formed transversely in relation to the longitudinal direction of the support structure (16).

2. Filter element according to claim 1, **characterised in that**, when in position, the surface portion (10) forms a sheath which is formed from a continuous web-like strip in a winding direction (W) running obliquely to the longitudinal axis (L) of the sheath-like structure.

3. Filter element according to either claim 1 or claim 2, **characterised in that** the winding direction (W) of the strip is in the form of a helix, spiral or screw.

4. Filter element according to either claim 2 or claim 3, **characterised in that** first surface regions (18a-18d) oriented in the winding direction running obliquely to the longitudinal direction (L) of the sheath each have adjacent fluid passage openings (12a-12e) arranged in a regular pattern with the respective ellipse-shaped opening cross-sections.

5. Filter element according to claim 4, **characterised in that** second surface regions (20a-20c) without any fluid passages formed therein are provided between the first surface regions (18a-18d) formed as webs.

6. Filter element according to claim 5, **characterised in that** connection points, preferably produced in the form of a welded joint or a continuously formed folded seam, of adjacent surface portions (10) or strip-shaped surface portion (10) wound in the winding direction, are arranged in a winding design in the second surface regions (20a-20c), leaving free the fluid passage openings (12a-12e) in the first surface regions (18a-18d).

7. Filter element according to any one of claims 2 to 6, **characterised in that** it is designed as a web-like continuously formed strip or surface portion (10) with fluid passage openings (12a-12e) in the centre, said openings being delimited at the edges with respect to the adjacent opposite strip edges of the second surface regions (20a-20c).

8. Filter element according to any one of claims 2 to 7, **characterised in that** the inclination of the winding direction (W) is selected such that the respective main elliptical axis of the fluid passage openings (12a-12e) is arranged transversely in relation to the longitudinal axis (L) of the support structure sheath in the ready-wound surface portion (10).

9. Filter element according to any one of claims 4 to 8, **characterised in that** the corresponding fluid passage openings (12a-12e) in at least the one surface region (18a-18d) of the surface portion (10) are arranged in rows (14a-14c) and columns (15b-15e).

10. Filter element according to any one of the preceding claims, **characterised in that** at least one marking region (22a-22d) with at least one discernible marking is formed on the surface portion (10).

11. Filter element according to any one of the previous claims, **characterised in that** the respective marking is formed by at least one additional fluid passage opening (24) in the surface portion (10).

## Revendications

1. Elément de filtre comprenant une structure (16) d'appui en forme d'enveloppe dans la direction (L) longitudinale et au moins un milieu filtrant s'appliquant à la structure (16) d'appui, la structure (16) d'appui étant disposée en forme de cylindre tubulaire entre une coiffe (26) supérieure d'extrémité et une coiffe (28) inférieure d'extrémité et étant formée d'une partie (10) de surface s'étendant au moins dans une direction x horizontale et dans une direction y verticale, dans laquelle sont constituées plusieurs ouvertures (12a-12e) de passage de fluide de sections transversales d'ouverture données à l'avance qui (12a-12e) sont constituées en ayant la même forme sur la partie (10) de surface et sont disposées régulièrement, **caractérisé en ce que** la section transversale d'ouverture de l'ouverture (12a-12e) de passage respectif comprend la forme d'une ellipse, **en ce que** l'ellipse respective a dans la direction x un premier axe (2a) et dans la direction y un deuxième axe (2b), **en ce que** l'équation de l'ellipse pour l'ouverture (12a-12e) respective de passage de fluide sous la forme canonique pour un axe de coordonnées et d'ellipse qui coïncide x²/a² + y²/b² = 1 et **en ce que** la forme d'ellipse s'étendant en longueur dans la direction x est constituée transversalement à la direction longitudinale du corps (16) d'appui.

2. Elément de filtre suivant la revendication 1, **caractérisé en ce que** l'enveloppe mise sur la partie (10) de surface est constituée d'un ruban continu en forme de bande dans une direction (W) d'enroulement s'étendant en oblique par rapport à l'axe (L) longitudinal de la structure en forme d'enveloppe.

3. Elément de filtre suivant la revendication 1 ou 2, **caractérisé en ce que** la direction (W) d'enroulement du ruban est en forme d'ellipse, de spirale ou de vis.

4. Elément de filtre suivant la revendication 2 ou 3, **caractérisé en ce que** des premières régions (18a-18d) de surface, dirigées dans la direction (W) d'enroulement s'étendant en oblique par rapport à la direction (L) longitudinale de l'enveloppe, ont chacune des ouvertures (12a-12e) de passage de fluide disposées régulièrement et les unes à côté des autres en ayant les sections transversales d'ouverture en forme d'ellipses.

5. Elément de filtre suivant la revendication 4, **caractérisé en ce qu'**il est prévu entre les premières régions (18a-18d) de surface constituées en forme de bande, respectivement, des deuxièmes régions (20a-20c) de surface sans passage de fluide qui y soit constitué.

6. Elément de filtre suivant la revendication 5, **caractérisé en ce que**, dans un mode de construction d'enroulement, dans les deuxièmes régions (20a-20c) de surface, en laissant libre les ouvertures (12a-12e) de passage de fluide dans les premières régions (18a-18d) de surface, sont disposés des points de liaison réalisés de préférence sous la forme d'un soudage ou d'un cordon de sertissage, réalisé de manière continue, de parties (10) de surface voisines ou de la partie (10) de surface en forme de ruban enroulée dans la direction (W) d'enroulement.

7. Elément de filtre suivant l'une des revendications 2 à 6, **caractérisé en ce que** la partie (10) de ruban ou de surface, constituée de manière continue en forme de bande, a, au milieu, les ouvertures (12a-12e) de passage de fluide qui sont délimitées du côté du bord par rapport au bord de ruban opposé voisin, par les deuxièmes régions (20a-20c) de surface.

8. Elément de filtre suivant l'une des revendications 2 à 7, **caractérisé en ce que** l'inclinaison de la direction (W) d'enroulement est choisie de manière à ce que, lorsque la partie (10) de surface est finie d'enroulement, les axes principaux d'ellipses des ouvertures (12a-12e) de passage de fluide soient transversaux à l'axe (L) longitudinal de l'enveloppe de la structure d'appui.

9. Elément de filtre suivant l'une des revendications 4 à 8, **caractérisé en ce que**, dans au moins la région (18a-18d) de surface de la partie (10) de surface, les ouvertures (12a-12e) de passage de fluide correspondantes sont disposées en lignes (14a-14c) et en colonnes (15b-15e).

10. Elément de filtre suivant l'une des revendications précédentes, **caractérisé en ce qu'**il est constitué sur la partie (10) de surface au moins une région (22a-22d) de repérage ayant, respectivement, un repérage reconnaissable.

11. Elément de filtre suivant l'une des revendications précédentes, **caractérisé en ce que** le repérage respectif est constitué par au moins une autre ouverture (24) de passage de fluide de la partie (10) de surface.
